# EUROPÄISCHE PATENTSCHRIFT

(11) **EP 0 695 723 B1**
(45) Veröffentlichungstag und Bekanntmachung des Hinweises auf die Patenterteilung: **11.08.1999**
(21) Anmeldenummer: 95107254.5
(22) Anmeldetag: 12.05.1995
(51) Int. Cl.: C03C 3/06, C03C 4/08, H01J 61/30, H01K 1/28

(54) **Quarzglas und elektrische Lampe mit Bestandteilen aus Quarzglas**
Quartz glass and electric lamp with quartz glass elements
Verre de quartz et lampe électrique avec éléments en verre de quartz

(30) Priorität: 25.05.1994 DE 4418198
(43) Veröffentlichungstag der Anmeldung: 07.02.1996
(73) Patentinhaber: Patent-Treuhand-Gesellschaft für elektrische Glühlampen mbH, 81543 München (DE)
(72) Erfinder: Deisenhofer, Manfred, D-86450 Altenmünster (DE); Meiss, Dieter, Dr., D-72076 Tübingen (DE); Messner, Ekkehard Dr., D-86163 Augsburg (DE)

(56) Entgegenhaltungen:
- EP-A- 0 527 461
- EP-A- 0 574 158
- WO-A-91/11401
- US-A- 1 634 182
- US-A- 3 527 711

## Beschreibung

Die Erfindung betrifft ein Quarzglas gemäß dem Oberbegriff des Patentanspruches 1 bzw. dem Oberbegriff des Patentanspruches 5 sowie eine elektrische Lampe mit Bestandteilen aus diesem Quarzglas.

Insbesondere handelt es sich um ein dotiertes Quarzglas, das zur Fertigung von Entladungsgefäßen und Außenkolben für Hochdruckentladungslampen sowie für Lampenkolben von Halogenglühlampen verwendet wird.

Wegen der hohen thermischen Belastung kommt als Material zur Fertigung von Entladungsgefäßen für Hochdruckentladungslampen neben lichtdurchlässiger Keramik nur noch Quarzglas in Frage. Reines Quarzglas, das zu ca. 99,99 mol-% aus Kieselsäure besteht, ist allerdings nicht nur für Licht, sondern auch für UV-Strahlung transparent. Es müssen daher Maßnahmen ergriffen werden, um die gesundheitsschädliche UV-Strahlung ausreichend abzuschwächen. Eine Möglichkeit, die von der Lampe emittierte UV-Strahlung ausreichend zu reduzieren, besteht darin, das zur Entladungsgefäßfertigung verwendete Quarzglas mit einer UV-Strahlung absorbierenden Dotierung zu versehen. Bei der Auswahl der Dotierstoffe und auch bei der Konzentration muß beachtet werden, daß die physikalischen Eigenschaften des Quarzglases, wie z. B. die Viskosität, die Lichtdurchlässigkeit (auch die Färbung des Glases) und die Kristallisationsneigung, durch die Dotierung nicht auf unerwünschte Weise verändert werden. Als Dotierstoff bewährt hat sich vor allem Cer, das als Oxid, Silikat oder Aluminat dem Quarzpulver vor der Erschmelzung des Quarzglases beigemischt wird. Um den besonders gefährlichen kurzwelligen Anteil der UV-Strahlung weiter abzuschwächen, wird häufig noch ein geringer Titanzusatz in Form von Titanoxid verwendet.

Das U.S.-Patent 5 196 759 beschreibt ein den Oberbegriffen der Patentansprüche 1 und 5 entsprechendes Quarzglas, das mit bis zu 0,5 Gewichtsprozent Ceroxid, entsprechend einem reinen Ceranteil von ca. 0,41 Gewichtsprozent, und zusätzlich mit Titanoxid dotiert ist. In der Offenlegungsschrift EP 0 478 059 ist ebenfalls ein Quarzglas gemäß den Oberbegriffen der Patentansprüche 1 und 5 offenbart. Es besitzt eine UV-Strahlen absorbierende Dotierung bestehend aus 0,1 mol-% Cerdisilikat und 0,01 mol-% Titanoxid. Das entspricht einem reinen Ceranteil im Quarzglas von ca. 0,47 Gewichtsprozent.

Eine höhere Cerkonzentration für die UV-Strahlen absorbierende Dotierung des Quarzglases sind in der Offenlegungsschrift EP 0 588 284 Al und in der noch unveröffentlichten europäischen Patentanmeldung EP-PA 931122270.9 (Art. 54(3)) offenbart. Die höhere Cerdotierung gewährleistet auch bei dünnwandigen Gefäßen eine noch ausreichende Absorption der schädlichen UV-Strahlung. Als Dotiersubstanzen werden hier Ceraluminat und Titanoxid vorgeschlagen.

Mittels dieser Cer-Titan-Dotierung wird die Absorptionskante des Quarzglases auf eine Wellenlänge von ca. 350 nm eingestellt und damit die Transparenz des Quarzglases für die unerwünschte, gesundheitsschädliche UV-Strahlung auf ein tolerierbares Maß reduziert. Allerdings kann dieses Quarzglas einem mehrstündigen Glühprozeß in einer O₂-Atmosphäre unterzogen werden, um eine noch bestehende Resttransparenz des Quarzglases bei Wellenlängen in der Umgebung von 245 nm zu beseitigen. Ferner emittiert das Cer eine durch UV-Strahlung stimulierte blaue Fluoreszenzstrahlung, die zur Verbesserung der Farbwiedergabe von elektrischen Lampen im blauen Spektralbereich ausgenutzt werden kann, wie das beispielsweise in den oben zitierten Schriften erwähnt wird. Bei in Kfz-Scheinwerfern eingesetzten Hochdruckentladungslampen ist eine Erhöhung des Blaulichtanteils allerdings unerwünscht. Außerdem stört diese blaue Fluoreszenz des Cers bei elektrischen Lampen, die in Scheinwerfern oder ähnlichen optischen Systemen mit einer gerichteten Lichtemission eingesetzt werden, da sie zu einem erhöhten Streulichtanteil führt, der die scharfe Hell/Dunkelgrenze des Lichtkegels verwischt. Bei diesen Anwendungen ist es erforderlich, die Fluoreszenzstrahlung des Cers zu unterdrücken.

In dem Patent EP 0 032 763 ist ein Quarzglas mit einer UV-Strahlen absorbierenden Dotierung beschrieben, die 0,1 bis 3,0 Gewichtsprozent Alkalimetalloxid, 0,2 bis 5,0 Gewichtsprozent Seltenerdmetalloxid und 0 bis 0,5 Gewichtsprozent Erdalkalimetalloxid enthält. Als Seltenerdmetalloxid werden Praseodymoxid (PrO₂) bzw. Europiumoxid (Eu₂O₃) und als Alkalimetalloxid wird Kaliumoxid (K₂O) in den Ausführungsbeispielen angegeben. Das Seltenerdmetalloxid wirkt als UV-Strahlen-Absorber, während das Alkalimetalloxid die Löslichkeit des Seltenerdmetalloxides im Quarzglas erhöht. Dieses so dotierte Quarzglas besitzt eine Absorptionskante bei einer Wellenlänge von ca. 250 nm, d. h., Strahlung mit einer Wellenlänge unterhalb von 250 nm wird im Quarzglas absorbiert, während das Quarzglas für Strahlung mit einer Wellenlänge größer als 250 nm transparent ist. Insbesondere wird von diesem Quarzglas die UV-Strahlung im Wellenlängenbereich von 250 nm bis 350 nm nahezu ungeschwächt durchgelassen. Damit ist dieses Quarzglas für Entladungsgefäße oder Hüllkolben von Hochdruckentladungslampen vollkommen ungeeignet, oder aber es müssen neben dieser Dotierung noch begleitende Maßnahmen zur Unterdrückung der UV-Strahlung mit Wellenlängen oberhalb von 250 nm ergriffen werden.

Es ist die Aufgabe der Erfindung, ein mit einer Ultraviolettstrahlen absorbierenden Dotierung versehenes Quarzglas bereitzustellen, das möglichst keine oder nur eine sehr geringe Transparenz im ultravioletten Spektralbereich aufweist, das möglichst keine oder nur eine sehr geringe durch UV-Strahlung stimulierbare Fluoreszenzstrahlung im sichtbaren Spektralbereich emittiert und das außerdem zur Fertigung von Entladungsgefäßen oder Hüllkolben für Hochdruckentladungslampen und zur Fertigung von Lampen kolben für Halogenglühlampen geeignet ist.

Diese Aufgabe wird erfindungsgemäß durch die kennzeichnenden Merkmale des Patentanspruches 1 bzw. des Patentanspruches 5 gelöst. Besonders vorteilhafte Ausführungen der Erfindung sind in den Unteransprüchen beschrieben.

Das erfindungsgemäße Quarzglas besitzt eine Cer enthaltende, UV-Strahlen absorbierende Dotierung. Um die durch UV-Strahlung anregbare blaue Fluoreszenzstrahlung des Cers zu stark vermindern, ist das erfindungsgemäße Quarzglas zusätzlich mit Praseodym oder einer Praseodymverbindung dotiert. Die Dotiersubstanzen und -mengen sind derart abgestimmt, daß die Absorptionskante des Quarzglases bei einer Wellenlänge von ca. 350 nm liegt, so daß praktisch keine, bzw. nur in einem tolerierbaren Ausmaß UV-Strahlung transmittiert wird. Durch den Praseodymzusatz im Quarzglas wird die Fluoreszenz des Cers gequencht, d. h., die Übergangswahrscheinlichkeit für strahlende Übergänge im Atomspektrum des Cers nimmt stark ab und die Wahrscheinlichkeit eines strahlungslosen Überganges der durch die UV-Strahlung angeregten Cerionen in den Grundzustand erhöht sich entsprechend. Da Praseodym ebenfalls, wie Cer, UV-Strahlen absorbiert, kann der Ceranteil mit zunehmender Praseodymdotierung entsprechend verringert und dadurch die Fluoreszenz weiter reduziert werden. Vorteilhafterweise werden Cer und vorzugsweise auch Praseodym dem Quarzpulver als Aluminate vor dem Erschmelzen des Quarzglases beigemischt. Diese Verbindungen haben gegenüber Oxiden, insbesondere gegenüber dem vierwertigen Ceroxid (Ce₂O₄) den Vorteil, daß die Aluminate beim Erschmelzen des Quarzglases keinen Sauerstoff freisetzen, der den Wolframschmelztiegel oxidieren würde. Außerdem erhöht das mit dem Aluminat hinzugefügte Aluminium die Löslichkeit des Cers und auch des Praseodyms im Quarzglas, so daß der reine Cer- bzw. Praseodymanteil, bezogen auf das undotierte Quarzglas, bis zu 1,25 Gewichtsprozent betragen kann, ohne daß inhomogene Bereiche im Quarzglas auftreten oder das Quarzglas zur Entglasung neigt.

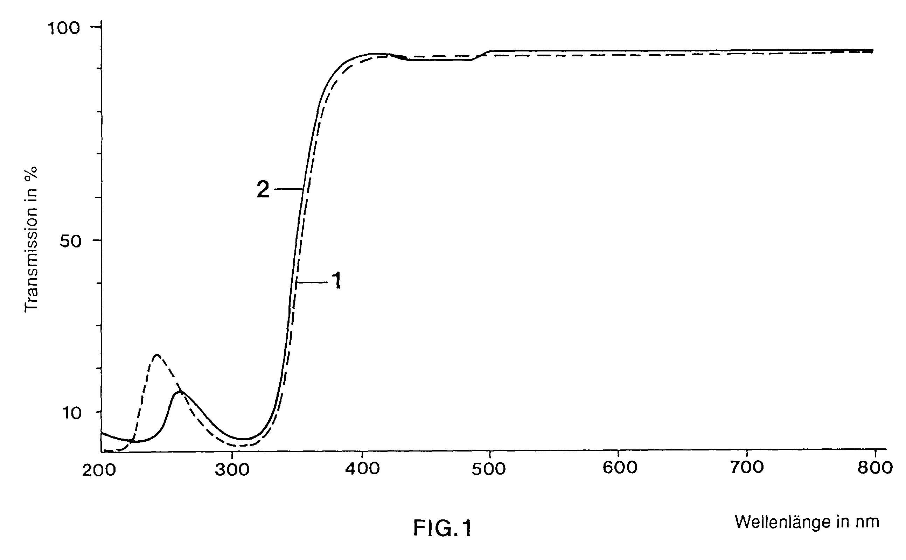

Das erfindungsgemäße Quarzglas kann zusätzlich eine geringe Titandotierung enthalten, die die Absorption des Quarzglases im kurzwelligen UV-C-Bereich weiter verbessert. Andererseits zeigen die Meßkurve in Figur 1, daß das erfindungsgemäße Cer-Praseodym dotierte Quarzglas (Meßkurve 2), insbesondere im kurzwelligen UV-Bereich eine zufriedenstellende Absorption besitzt. Die Titan-Dotierung (Figur 1, Meßkurve 1) kann also durch eine Praseodym-Dotierung ersetzt werden. Das Praseodym wirkt nicht nur fluoreszenzhemmend, sondern auch als Absorber für kurzwellige UV-Strahlung.

Durch eine zusätzliche Dotierung des erfindungsgemäßen Quarzglases mit einer Barium-Bor-Verbindung, beispielsweise mit Bariummetaborat, wird die Fluoreszenz des Quarzglases nochmals reduziert. Allerdings verringert sich durch diesen Zusatz auch die Viskosität des Quarzglases. Einerseits läßt sich dadurch das Quarzglas einfacher und energiesparender bearbeiten, andererseits verringert der Bariumboratzusatz aber die thermische Belastbarkeit des Quarzglases. Dieses Quarzglas eignet sich daher vorzugsweise für das Entladungsgefäß umschließende, thermisch weniger stark belastete Hüllkolben von Hochdruckentladungslampen und für gering belastete Lampenkolben von Halogenglühlampen.

Die Erfindung wird nachstehend anhand mehrerer Ausführungsbeispiele näher erläutert. Es zeigen:
- Figur 1: Transmissionskurven für ein Cer-Titan (0,5 Gew.-% CeAlO₃ u. 0,04 Gew.-% TiO₂) dotiertes Quarzglas gemäß dem Stand der Technik (Graph 1) und für ein Cer-Praseodymaluminat (1,25 Gew.-% Ce_{0,4}Pr_{0,6}AlO₃) dotiertes Quarzglas gemäß eines ersten Ausführungsbeispiels (Graph 2) der Erfindung
- Figur 2: Transmissionskurven für ein Cer-Titan (1,0 Gew.-% CeAlO₃ u. 0,05 Gew.-% TiO₂) dotiertes Quarzglas gemäß dem Stand der Technik (Graph 1) und für ein Cer-Praseodymaluminat (1,17 Gew.-% Ce_{0,6}Pr_{0,4}AlO₃) dotiertes Quarzglas entsprechend eines zweiten Ausführungsbeispiels (Graph 2) der Erfindung
- Figur 3: Transmissionskurve für ein mit Cer-Praseodym-Titan (0,5 Gew.-% CeAlO₃ u. 0,5 Gew.-% Pr₆O₁₁ u. 0,04 Gew.-% TiO₂) dotiertes Quarzglas entsprechend eines dritten Ausführungsbeispiels der Erfindung
- Figur 4: Temperaturabhängigkeit der Fluoreszenzstrahlung des dotierten Quarzglases gemäß der Ausführungsbeispiele eins bis vier (Graphen 2 bis 5) im Vergleich zu den Cer-Titan dotierten Quarzgläsern gemäß des Standes der Technik (Graphen 1a und 1b)
- Figur 5: Temperaturabhängigkeit der Viskosität des erfindungsgemäßen Quarzglases entsprechend der Ausführungsbeispiele drei (Graph 2) und vier (Graph 3) im Vergleich zu undotiertem Quarzglas (Graph 1)

Bei allen Ausführungsbeispielen wird als Ausgangsmaterial zum Erschmelzen des Quarzglases Quarzsand oder / und Bergkristall verwendet, der zu mehr als 99,9 Molprozent aus Kieselsäure (SiO₂) besteht. Die pulverisierten Dotiersubstanzen werden dem Quarzsand bzw. Bergkristall vor dem Erschmelzen des Quarzglases beigemischt und mit dem Ausgangsmaterial homogenisiert.

Beim ersten Ausführungsbeispiel werden dem Quarzsand bzw. dem Bergkristall 1,25 Gewichtsprozent Cer-Praseodymaluminat (Ce_{0,4}Pr_{0,6}AlO₃) als Dotiermittel zugesetzt. Die Gewichtsprozentangaben beziehen sich generell auf das Ausgangsmaterial, d. h., auf den Quarzsand bzw. Bergkristall, der als Rohmaterial zum Erschmelzen des Quarzglases dient. Das Molverhältnis von Cer zu Praseodym in der Cer-Praseodymaluminatverbindung beträgt bei diesem Ausführungsbeispiel 2/3. Der reine Ceranteil im Quarzglas berechnet sich daher zu ca. 0,32 Gewichtsprozent und der reine Praseodymanteil zu ca. 0,49 Gewichtsprozent.

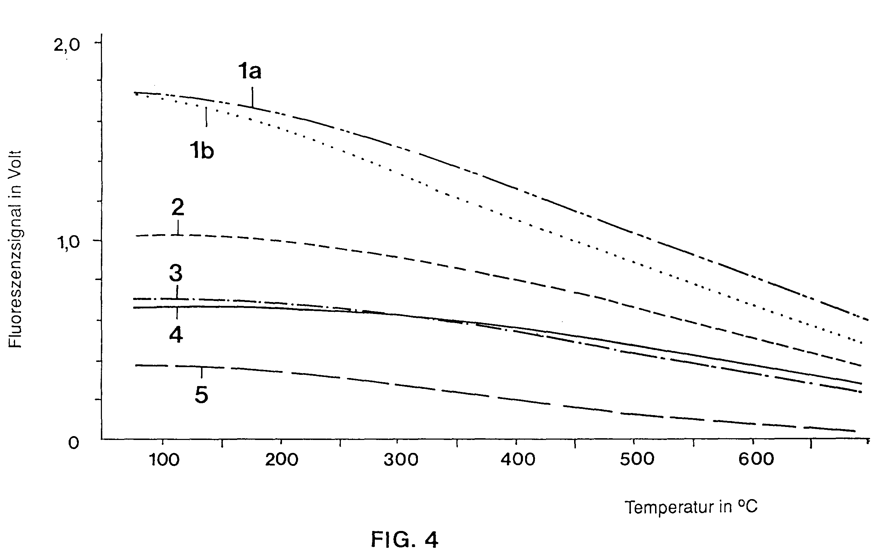

In der Figur 1 ist das Transmissionsverhalten eines dotierten Quarzglases gemäß des ersten Ausführungsbeispiels im Vergleich zu dem eines Cer-Titan dotierten Quarzglases gemäß des Standes der Technik über der Wellenlänge, im Spektralbereich von 200 nm bis 800 nm, dargestellt. Der untersuchte Spektralbereich umfaßt damit die kurzwellige UV-C-Stahlung, die UV-B- und UV-A-Strahlung und den sichtbaren Spektralbereich. Die Transmission ist auf der vertikalen Achse in Prozent angegeben und bezieht sich auf die Intensität der auf die Quarzglasprobe auftreffenden Strahlung. Da ungefähr 6,5% der auftreffenden Strahlung reflektiert werden, bedeuten 93,5% Transmission beispielsweise, daß bei der betrachteten Wellenlänge die Strahlung ungeschwächt durch das Quarzglas hindurchgetreten ist. Die Meßkurve 1 zeigt das Transmissionsverhalten für Quarzglas gemäß des Standes der Technik, das mit 0,5 Gewichtsprozent Ceraluminat (CeAlO₃), entsprechend einem reinen Ceranteil von ca. 0,33 Gewichtsprozent, und mit 0,04 Gewichtsprozent Titandioxid (TiO₂) dotiert ist, während die Meßkurve 2 die Transmissionseigenschaften des dotierten Quarzglases gemäß des ersten Ausführungsbeispieles der Erfindung demonstriert. Die Wandstärke beider Quarzglasproben beträgt ungefähr 1,0 mm. Im sichtbaren Spektralbereich, oberhalb von ca. 350 nm, weisen beide Proben eine Transmission von mehr als 90% auf. Dagegen nimmt die Transmission im ultravioletten Spektralbereich, unterhalb von ca. 350 nm, auf Werte unter 5% ab, abgesehen von einer erhöhten Resttransmission bei Wellenlängen im Bereich von ca. 245 nm bzw. 270 nm. Bei dem Cer-Titan dotierten Quarzglas beträgt diese Resttransmission etwa 25% und bei der erfindungsgemässen Quarzglasprobe, aufgrund des Praseodymzusatzes, nur ca. 15%. Im Fall der Cer-Titan dotierten Quarzglasprobe gemäß des Standes der Technik, kann diese doch stark überhöhte Resttransmission bei 245 nm durch eine O₂-Glühung beseitigt werden. Abgesehen von dieser Resttransmission besitzen beide Quarzglasproben ein annähernd gleich gutes Absorptionsverhalten im UV-Bereich und gute Transmissionseigenschaften im sichtbaren Spektralbereich. Ein deutlicher Unterschied zwischen beiden Proben zeigt sich allerdings im Fluoreszenzverhalten, das in Figur 4 dargestellt ist. Im gesamten Temperaturbereich von ca. 25 °C bis 650 °C zeigt das dotierte Quarzglas gemäß des ersten Ausführungsbeispiels (Figur 4, Meßkurve 4) ein deutlich geringeres Fluoreszenzsignal als das Cer-Titan dotierte Quarzglas gemäß des Standes der Technik (Figur 4, Meßkurve 1a), obwohl die Ceranteile in beiden Quarzglasproben annähernd gleich sind. Der Praseodymzusatz ist damit für die Abschwächung der Fluoreszenzstrahlung verantwortlich.

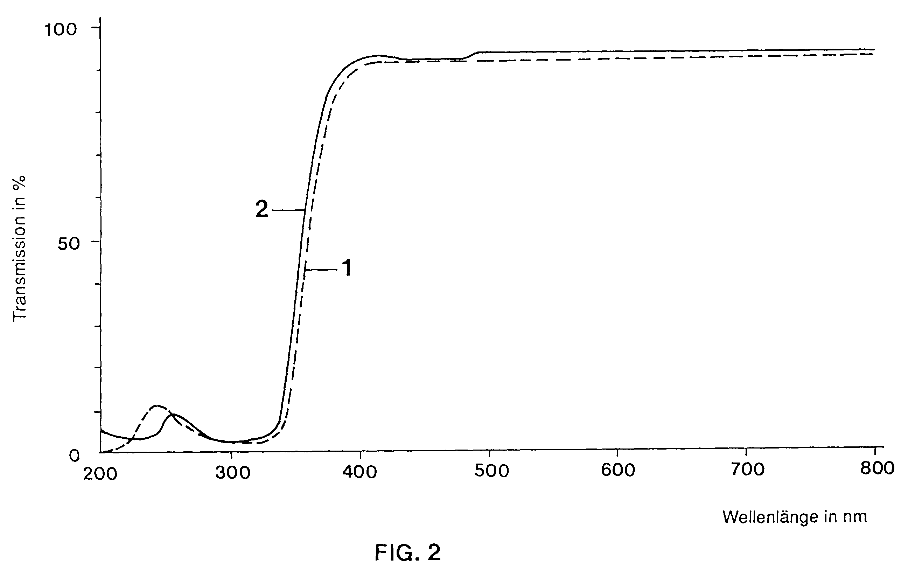

In Figur 2 ist das Transmissionsverhalten eines dotierten Quarzglases gemäß eines zweiten Ausführungsbeispiels der Erfindung (Meßkurve 2) dargestellt. Diese Quarzglasprobe besitzt eine Dicke von ca. 1,0 mm und weist als Dotiermittel 1,17 Gewichtsprozent Cer-Praseodymaluminat (Ce_{0,6}Pr_{0,4}AlO₃) auf. Das Molverhältnis von Cer zu Praseodym im Cer-Praseodymaluminat beträgt hier, im Unterschied zum ersten Ausführungsbeispiel, 3/2. Der reine Ceranteil im Quarzglas berechnet sich daher zu ca. 0,46 Gewichtsprozent und der reine Praseodymanteil zu ca. 0,31 Gewichtsprozent. Trotz der insgesamt geringeren Dotiermittelkonzentration besitzt das Quarzglas gemäß des zweiten Ausführungsbeispiels einen höheren Cergehalt als das Quarzglas gemäß des ersten Ausführungsbeispiels. Auf den höheren Cergehalt ist vermutlich die geringere Resttransmission der Quarzglasprobe gemäß des zweiten Ausführungsbeispiels im Vergleich zu der des ersten Ausführungsbeispiels zurückzuführen. Die Resttransmission im Wellenlängenbereich von ca. 270 nm liegt für diese Probe (Figur 2) unterhalb von 10%. Bei Wellenlängen oberhalb von ca. 300 nm zeigt das Transmissionsverhalten der beiden erfindungsgemäßen Quarzglasproben keine signifikanten Unterschiede. Zum Vergleich ist in Figur 2 auch das Transmissionsverhalten einer weiteren Cer-Titan dotierten Quarzglasprobe (Meßkurve 1) gemäß des Standes der Technik dargestellt. Diese Quarzglasprobe ist mit 1,0 Gewichtsprozent Ceraluminat (CeAlO₃) und 0,05 Gewichtsprozent Titanoxid (TiO₂) dotiert. Der reine Ceranteil beträgt hier ca. 0,65 Gewichtsprozent. Oberhalb von ca. 300 nm zeigen die beiden Meßkurven in Figur 2 keine signifikanten Unterschiede. Die Resttransmission ist bei der Cer-Titan dotierten Probe (Figur 2, Meßkurve 1) zum kurzwelligen UV-Bereich hin verschoben und liegt bei ca. 245 nm und ist mit ca. 12% geringfügig höher als die Resttransmission der Quarzglasprobe gemäß des zweiten Ausführungsbeispiels (Figur 2, Meßkurve 2).

Das Fluoreszenzsignal der Quarzglasprobe gemäß des zweiten Ausführungsbeispiels (Figur 4, Graph 2) ist allerdings aufgrund des höheren Cergehaltes und des größeren Cer-Praseodym-Molverhältnisses im Cer-Praseodymaluminat deutlich stärker ausgeprägt, als bei der Quarzglasprobe gemäß des ersten Ausführungsbeispiels der Erfindung (Figur 4, Graph 4). Andererseits ist das Fluoreszenzsignal des Quarzglases gemäß des zweiten Ausführungsbeispiels (Figur 4, Graph 2) aber immer noch deutlich schwächer als der Fluoreszenzsignale der Cer-Titan dotierten Quarzglasproben gemäß des Standes der Technik (Figur 4, Graphen 1a und 1b).

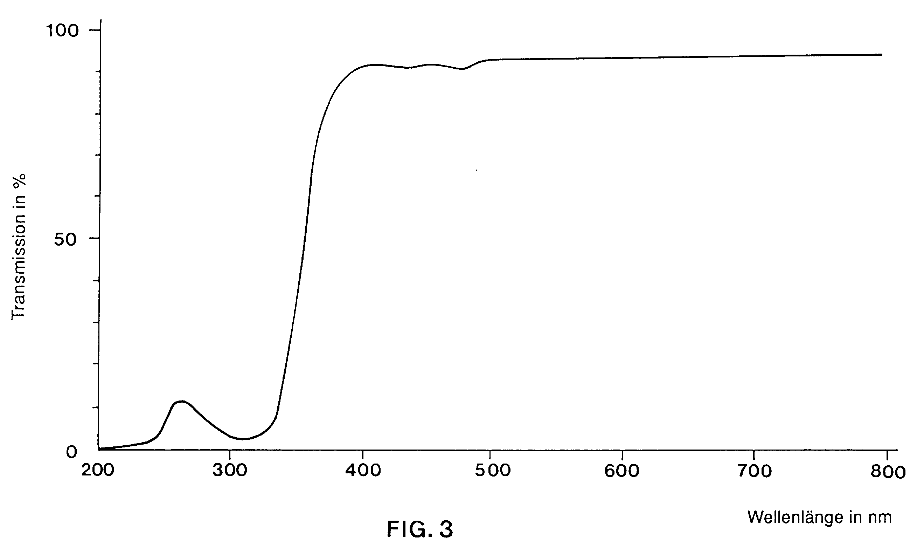

In Figur 3 ist das Transmissionsverhalten eines dotierten Quarzglases gemäß eines dritten Ausführungsbeispiels der Erfindung dargestellt. Diese Quarzglasprobe besitzt ebenfalls eine Dicke von ca. 1,0 mm und weist eine Cer-Praseodym-Titan Dotierung auf, die in Form von 0,5 Gewichtsprozent Ceraluminat (CeAlO₃), 0,5 Gewichtsprozent Praseodymoxid (Pr₆O₁₁) und 0,05 Gewichtsprozent Titanoxid (TiO₂) dem Ausgangsmaterial (Quarzsand bzw. Bergkristall) vor dem Erschmelzen des Quarzglases in Pulverform beigemischt wurde. Der reine Ceranteil im Quarzglas berechnet sich daher hier zu ca. 0,33 Gewichtsprozent und der reine Praseodymanteil zu ca. 0,41 Gewichtsprozent, während der reine Titananteil nur ca. 0,03 Gewichtsprozent beträgt. Für Wellenlängen oberhalb von ca. 300 nm zeigt das Transmissionsverhalten dieser Quarzglasprobe keine signifikanten Unterschiede zu den Proben der ersten beiden Ausführungsbeispiele. Die Absorptionskante liegt ebenfalls, wie bei den vorherigen Ausführungsbeispieln im Bereich von ca. 340 nm bis 350 nm und eine geringfügig erhöhte Resttransmission kann bei Wellenlängen in der Umgebung von ca. 270 nm beobachtet werden. Für Wellenlängen unterhalb von 240 nm ist die Transmission der Quarzglasprobe, aufgrund der zusätzlichen Titandotierung, verschwindend gering. Das Fluoreszenzverhalten dieser Quarzglasprobe (Figur 4, Graph 3) unterscheidet sich kaum von dem des ersten Ausführungsbeispiels (Figur 4, Graph 4).

Beim vierten Ausführungsbeispiel handelt es sich um ein Quarzglas, das neben einer Cer-Praseodym-Titan Dotierung, ähnlich der des dritten Ausführungsbeispiels, zusätzlich noch mit Bariummetaborat (BaB₂O₄) dotiert ist. Die Dotierung des vierten Ausführungsbeispiel besteht aus 0,5 Gewichtsprozent Ceraluminat (CeAlO₃), 0,5 Gewichtsprozent Praseodymoxid (Pr₆O₁₁), 0,05 Gewichtsprozent Titanoxid (TiO₂) und 1,0 Gewichtsprozent Bariummetaborat (BaB₂O₄). Das Transmissionsverhalten dieser Quarzglasprobe, die eine Wandstärke von 1,0 mm besitzt, entspricht im wesentlichen dem des dritten Ausführungsbeispiels, da das Bariummetaborat die Transmissionseigenschaften des Quarzglases im betrachteten Wellenlängenbereich von 200 nm bis 800 nm nur in unbedeutendem Ausmaß beeinflußt. Durch den Bariummetaboratzusatz wird die Fluoreszenz des Quarzglases allerdings nochmals drastisch reduziert, wie ein Vergleich des zu diesem Ausführungsbeispiel gehörenden Graphen 5 in Figur 4 mit dem Graphen 3 zeigt, der das Fluoreszenzverhalten der Quarzglasprobe gemäß des dritten Ausführungsbeispiels darstellt. Im für den Lampenbetrieb relevanten Temperaturbereich von ca. 650°C verschwindet das Fluoreszenzsignal der Quarzglasprobe gemäß des vierten Ausführungsbeispiels fast vollständig. Der Bariummetaboratzusatz führt aber auch zu einer Viskositätserniedrigung des Quarzglases, so daß das Quarzglas gemäß des vierten Ausführungsbeispiels nur für thermisch weniger stark belastete Lampenteile, wie beispielsweise für das Entladungsgefäß umschliessende Hüllkolben von Hochdruckentladungslampen verwendet werden kann.

Die in Figur 4 dargestellten temperaturabhängigen Fluoreszenzsignale wurden mit Hilfe eines Lumineszenztasters gemessen, der das Fluoreszenzsignal in eine Gleichspannung kleiner als ca. 2 V umwandelt. Die Meßproben wurden jeweils in einem Ofen von Zimmertemperatur bis auf 650 °C aufgeheizt. Die Temperaturmessung erfolgte mittels eines Thermoelementes an einer vergleichbaren Referenzprobe. Zur Anregung der blauen Fluoreszenzstrahlung des Cers wurde die 365 nm-Linie einer Quecksilberhochdrucklampe benutzt. Bei den gemessenen Quarzglasproben handelt es sich um beidseitig plan geschliffene, polierte Laborschmelzen mit einer Wanddicke von jeweils 1,2 mm.

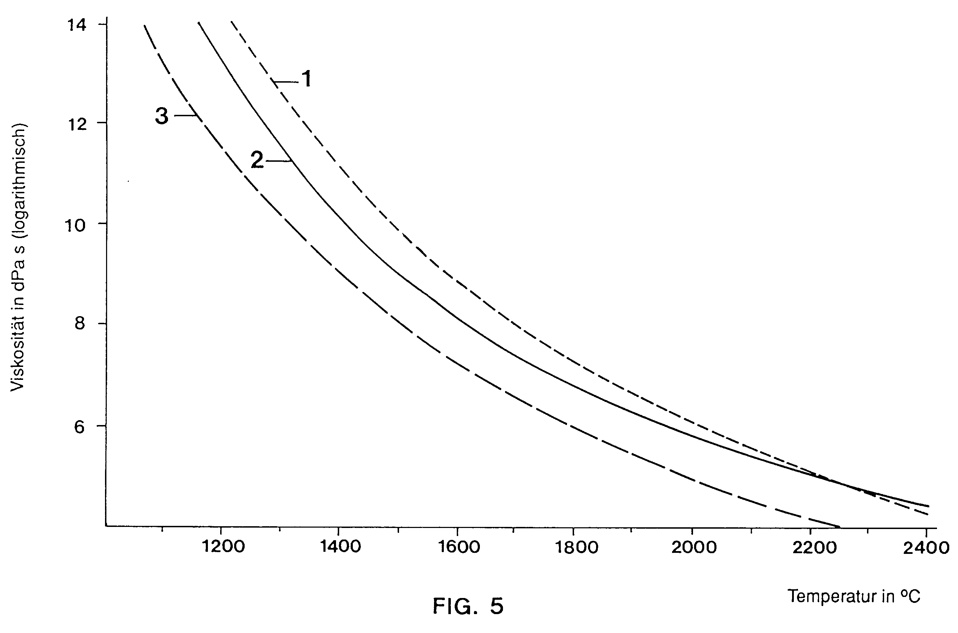

Figur 5 zeigt im Bereich von ca. 1100 °C bis 2400 °C die Temperaturabhängigkeit der Viskosität für zwei erfindungsgemäße Quarzglasproben (Kurven 2 und 3) im Vergleich zu undotiertem Quarzglas (Kurve 1). Auf der vertikalen Achse ist der Zehnerlogarithmus der Viskosität in der Einheit Dezipascal Sekunde (dPa s) aufgetragen. Die Meßkurve 2 stellt die Temperaturabhängigkeit der Viskosität für die Quarzglasprobe gemäß des dritten Ausführungsbeispiels und die Meßkurve 3 die Temperaturabhängigkeit der Viskosität für die Quarzglasprobe gemäß des vierten Ausführungsbeispiels dar. Diese Messungen erfolgten mit Hilfe eines Drillviskosimeters.

Aus den Meßkurven der Figur 5 geht hervor, daß sich die charakteristischen Viskositätspunkte wie der unterer Kühlpunkt (bei 10^{14,5} dPa s), der oberer Kühlpunkt (bei 10^{13,0} dPa s) und der Littleton-Punkt (bei 10^{7,6} dPas) bei den dotierten Quarzglasproben zu tieferen Temperaturen verschieben.

Bei dem Quarzglas gemäß des vierten Ausführungsbeispiels (Figur 5, Kurve 3) handelt es sich, aufgrund der bei vergleichweise niedrigen Temperaturen angesiedelten Viskositätspunkte, bereits um ein "weiches" Quarzglas, das sich nicht zur Fertigung von thermisch extrem hoch belasteten Lampenteilen, wie z. B. Entladungsgefäßen von Hochdruckentladungslampen eignet. Es kann allerdings zur Herstellung von Hüllkolben verwendet werden und bietet hierbei den Vorteil der niedrigeren Verarbeitungstemperatur. Die Meßkurve 2 in Figur 5 zeigt das Viskositätsverhalten der Quarzglasprobe gemäß des dritten Ausführungsbeispiels. Hierbei handelt es sich um ein "hartes" Quarzglas, das auch für die Fertigung von thermisch extrem hoch belasteten Entladungsgefäßen von Hochdruckentladungslampen geeignet ist. Die Viskositätskurven der Quarzglasproben gemäß der Ausführungsbeispiele 1 und 2 besitzen einen ähnlichen Verlauf wie die der Meßkurve 2. Auch diese Gläser zählen noch zu den "harten" Quarzgläsern und können zur Fertigung thermisch extrem hoch belasteter Lampenteile herangezogen werden.

Die Erfindung beschränkt sich nicht auf die obengenannten Ausführungsbeispiele. So kann beispielsweise das Cer-Praseodym-Verhältnis im Cer-Praseodymaluminat (CeₓPr₁₋ₓAlO₃ mit 0<x<1) gemäß der Ausführungsbeispiele 1 und 2 variiert werden. Außerdem können die Dotiermittel auch in anderer Form dem Quarzglas beigemischt werden. Zum Beispiel können Cer und Praseodym auch als Gemisch von Ceraluminat und Praseodymaluminat oder als Oxid bzw. Silikate dem Ausgangsmaterial zur Quarglasschmelze zugegeben werden. Die obere Grenze für den Cer- und Praseodymanteil im Quarzglas ist vor allem durch die Löslichkeit dieser Dotiersubstanzen im Quarzglas und durch die maximal erlaubte Viskositätserniedrigung festgelegt. Sinnvoll sind daher Obergrenzen für den reinen Cer- oder Praseodymanteil im Quarzglas von ca. 1,25 Gewichtsprozent. Der die Fluoreszenz hemmende und die Viskosität erniedrigende Bariummetaboratzusatz kann sogar bis zu einem Anteil von ca. 2,0 Gewichtsprozent gesteigert werden, wenn ein besonders weiches Quarzglas mit niedriger Verarbeitungstemperatur erwünscht ist. Die vier näher beschriebenen Ausführungsbeispiele stellen also nur eine Auswahl besonders bevorzugter Anwendungen dar.

## Patentansprüche

1. Quarzglas mit einer Cer oder eine Cerverbindung enthaltenden, Ultraviolettstrahlung absorbierenden Dotierung).
dadurch gekennzeichnet, daß
- der Ceranteil, bezogen auf das undotierte Quarzglas, 0,06 bis 1,0 Gewichtsprozent beträgt und
- das Quarzglas zusätzlich mit Fluoreszenz hemmenden Materialien dotiert ist, die die durch Ultraviolettstrahlung stimulierbare Fluoreszenzstrahlung des Cers vermindern.

2. Quarzglas nach Anspruch 1, dadurch gekennzeichnet, daß die die Fluoreszenz hemmenden Materialien Praseodym oder eine Praseodymverbindung enthalten, wobei der Praseodymanteil, bezogen auf das undotierte Quarzglas, 0,008 bis 1,25 Gewichtsprozent beträgt.

3. Quarzglas nach Anspruch 1, dadurch gekennzeichnet, daß die die Fluoreszenz hemmenden Materialien Barium und Bor enthalten.

4. Quarzglas mit einer Ultraviolettstrahlen absorbierenden Dotierung, die Cer oder eine Cerverbindung und Praseodym oder eine Praseodymverbindung aufweist, dadurch gekennzeichnet, daß der Ceranteil, bezogen auf das undotierte Quarzglas, 0,06 bis 1,0 Gewichtsprozent und der Praseodymanteil, bezogen auf das undotierte Quarzglas, 0,008 bis 1,25 Gewichtsprozent beträgt.

5. Quarzglas nach Anspruch 1 oder 4, dadurch gekennzeichnet, daß die die Ultraviolettstrahlen absorbierende Dotierung Ceraluminat (CeAlO₃) enthält.

6. Quarzglas nach Anspruch 2 oder 4, dadurch gekennzeichnet, daß das Quarzglas mit Praseodymoxid dotiert ist.

7. Quarzglas nach Anspruch 2 oder 4, dadurch gekennzeichnet, daß das Quarzglas mit Praseodymaluminat (PrAlO₃) dotiert ist.

8. Quarzglas nach den Ansprüchen 1 und 2 oder nach Anspruch 4, dadurch gekennzeichnet, daß das Quarzglas mit Cer-Praseodymaluminat CeₓPr₁₋ₓAlO₃ dotiert ist, wobei für die Größe x die Ungleichung 0<x<1 gilt.

9. Quarzglas nach den Ansprüchen 1 und 3 oder nach Anspruch 4, dadurch gekennzeichnet, daß das Quarzglas, bezogen auf das undotierte Quarzglas, mit 0,01 bis 2,0 Gewichtsprozent Bariummetaborat (BaB₂O₄) dotiert ist.

10. Quarzglas nach Anspruch 1 oder 4, dadurch gekennzeichnet, daß die Ultraviolettstrahlen absorbierende Dotierung Titan oder eine Titanverbindung aufweist.

11. Quarzglas nach Anspruch 1 oder 4, dadurch gekennzeichnet, daß das Quarzglas, bezogen auf das undotierte Quarzglas, mit 0,01 bis 0,15 Gewichtsprozent Titanoxid (TiO₂) dotiert ist.

12. Quarzglas nach einem oder mehreren der vorhergehenden Ansprüche, dadurch gekennzeichnet, daß das Quarzglas, bezogen auf das undotierte Quarzglas, mit
- 0,1 bis 1,5 Gewichtsprozent Ceraluminat (CeAlO₃),
- 0,01 bis 1,5 Gewichtsprozent Praseodymoxid (Pr₆O₁₁),
- 0 bis 0,15 Gewichtsprozent Titanoxid (TiO₂) und mit
- 0 bis 2,0 Gewichtsprozent Bariummetaborat (BaB₂O₄) dotiert ist.

13. Elektrische Lampe, dadurch gekennzeichnet, daß Bestandteile der elektrischen Lampe aus dotiertem Quarzglas gemäß eines oder mehrerer der vorstehenden Ansprüche bestehen.

## Claims

1. Quartz glass with a doping which contains cerium or a cerium compound and absorbs ultraviolet radiation, characterized in that
- the cerium content, based on the undoped quartz glass, is 0.06 to 1.0 per cent by weight, and
- the quartz glass is additionally doped with fluorescence-inhibiting materials which reduce the fluorescent radiation from the cerium which can be stimulated by ultraviolet radiation.

2. Quartz glass according to Claim 1, characterized in that the materials which inhibit the fluorescence contain praseodymium or a praseodymium compound, the praseodymium content, based on the undoped quartz glass, being 0.008 to 1.25 per cent by weight.

3. Quartz glass according to Claim 1, characterized in that the materials which inhibit the fluorescence contain barium and boron.

4. Quartz glass with a doping which absorbs ultraviolet rays and contains cerium or a cerium compound and praseodymium or a praseodymium compound, characterized in that the cerium content, based on the undoped quartz glass, is 0.06 to 1.0 per cent by weight and the praseodymium content, based on the undoped quartz glass, is 0.008 to 1.25 per cent by weight.

5. Quartz glass according to Claim 1 or 4, characterized in that the doping which absorbs the ultraviolet rays contains cerium aluminate (CeAlO₃).

6. Quartz glass according to Claim 2 or 4, characterized in that the quartz glass is doped with praseodymium oxide.

7. Quartz glass according to Claim 2 or 4, characterized in that the quartz glass is doped with praseodymium aluminate (PrAlO₃).

8. Quartz glass according to Claims 1 and 2 or according to Claim 4, characterized in that the quartz glass is doped with cerium-praseodymium aluminate CeₓPr₁₋ₓAlO₃, the inequation 0<x<1 applying to the variable x.

9. Quartz glass according to Claims 1 and 3 or according to Claim 4, characterized in that the quartz glass, based on the undoped quartz glass, is doped with 0.01 to 2.0 per cent by weight of barium metaborate (BaB₂O₄).

10. Quartz glass according to Claim 1 or 4, characterized in that the doping which absorbs ultraviolet rays contains titanium or a titanium compound.

11. Quartz glass according to Claim 1 or 4, characterized in that the quartz glass, based on the undoped quartz glass, is doped with 0.01 to 0.15 per cent by weight of titanium oxide (TiO₂).

12. Quartz glass according to one or more of the preceding claims, characterized in that the quartz glass, based on the undoped quartz glass, is doped with
- 0.1 to 1.5 per cent by weight of cerium aluminate (CeAlO₃),
- 0.01 to 1.5 per cent by weight of praseodymium oxide (Pr₆O₁₁),
- 0 to 0.15 per cent by weight of titanium oxide (TiO₂), and with
- 0 to 2.0 per cent by weight of barium metaborate (BaB₂O₄).

13. Electric lamp, characterized in that components of the electric lamp consist of doped quartz glass according to one or more of the preceding claims.

## Revendications

1. Verre au quartz ayant un dopage absorbant le rayonnement ultraviolet et contenant du Cer ou un composé de Cer,
caractérisé en ce que
- la proportion de Cer, rapportée au verre au quartz non dopé, est de 0,06 à 1,0 % en poids et,
- le verre au quartz est dopé en plus par des matériaux inhibant la fluorescence, qui diminuent le rayonnement fluorescent du Cer pouvant être stimulé par le rayonnement ultraviolet.

2. Verre au quartz suivant la revendication 1, caractérisé en ce que les matériaux inhibant la fluorescence contiennent du praséodyme ou un composé de praséodyme, la proportion de praséodyme, rapportée au verre au quartz non dopé, représentant de 0,008 à 1,25 % en poids.

3. Verre au quartz suivant la revendication 1, caractérisé en ce que les matériaux inhibant la fluorescence contiennent du baryum et du bore.

4. Verre au quartz ayant un dopage absorbant le rayonnement ultraviolet et comportant du Cer ou un composé de Cer et du praséodyme ou un composé de praséodyme, caractérisé en ce que la proportion de Cer, rapportée au verre au quartz non dopé, représente de 0,06 à 1,0 % en poids et la proportion de praséodyme, rapportée au verre au quartz non dopé, représente de 0,008 à 1,25 % en poids.

5. Verre au quartz suivant la revendication 1 ou 4, caractérisé en ce que le dopage absorbant les rayons ultraviolets renferme de l'aluminate de cérium (CeAlO₃).

6. Verre au quartz suivant la revendication 2 ou 4, caractérisé en ce que le verre au quartz est dopé par de l'oxyde de praséodyme.

7. Verre au quartz suivant la revendication 2 ou 4, caractérisé en ce que le verre au quartz est dopé par de l'aluminate de praséodyme (PrAlO₃).

8. Verre au quartz suivant les revendications 1 et 2 ou suivant la revendication 4, caractérisé en ce que le verre au quartz est dopé par de l'aluminate de sérium et de praséodyme CeₓPr₁₋ₓAlO_{3,} x vérifiant l'inégalité 0<x<1.

9. Verre au quartz suivant les revendications 1 et 3 ou suivant la revendication 4 caractérisé en ce que le verre au quartz est dopé par de 0,01 à 2,0 % en poids, rapporté au verre au quartz non dopé, de métaborate de baryum (BaB₂O₄).

10. Verre au quartz suivant la revendication 1 ou 4, caractérisé en ce que le dopage absorbant les rayons ultraviolets comportent du titane ou un composé de titane.

11. Verre au quartz suivant la revendication 1 ou 4, caractérisé en ce que le verre au quartz est dopé par 0,01 à 0,15 % en poids, rapporté au verre au quartz non dopé, d'oxyde de titane (TiO₂).

12. Verre au quartz suivant l'une ou plusieurs des revendications précédentes caractérisé en ce que le verre au quartz est dopé, rapporté au verre au quartz, par
- de 0,1 à 1,5% en poids d'aluminate de cérium (CeAlO₃),
- de 0,01 à 1,5% en poids d'oxyde de praséodyme (Pr₆O₁₁),
- de 0 à 0,15 % en poids d'oxyde de titane (TiO₂) et par
- de 0 à 2,0 % en poids de métaborate de baryum (BaB₂O₄).

13. Lampe électrique caractérisée en ce que des constituants de la lampe électrique sont en verre au quartz dopé suivant l'une ou plusieurs des revendications précédentes.
